# EUROPEAN PATENT APPLICATION

(11) **EP 2 314 482 A2**
(43) Date of publication of application: **27.04.2011**
(21) Application number: 10380120.5
(22) Date of filing: 21.09.2010
(51) Int. Cl.: B60R 16/06

(54) **Smart battery cable**

(30) Priority: 23.09.2009 ES 200930725
(71) Applicant: Cablerias Auto, S.L., 36400 Porriño (Pontevedra) (ES)
(72) Inventor: Gonzalez Fernandez, Francisco, 36400 Porriño (Pontevedra) (ES); Perez Castro, José Angel, 36400 Porriño (Pontevedra) (ES); Casal Gomez, David, 36400 Porriño (Pontevedra) (ES); Segovia Romero, Miguel, 36400 Porriño (Pontevedra) (ES)
(74) Representative: Carvajal y Urquijo, Isabel

(57) **Abstract**

Smart battery cable comprising an electronic control block (5) that comprises: a management and control block (12) comprising a microcontroller with a communication interface for controlling an external memory and A/D converters to convert the monitored parameters; a State of Charge Monitoring Block (13) comprising sensors to monitor in the positive side of the battery; a user interface block (16) comprising a push-button to reset the system and state indicators to indicate the disconnection; a battery disconnection block (17) comprising a switch to disconnect the passage of current; a permanent storage block (18) comprising a non-volatile memory to store data and perform later analyses. Additionally, it may comprise a Accident Sensor Block (14), a communication block (15) and an automatic resetting block (19) comprising an electromechanical sensor (20) to reset the system.

## Description

### FIELD OF THE INVENTION

The present invention relates to the field of automotive industry, particularly to batteries integrated into motor vehicles.

### STATE OF THE ART

The number of electronic components which are integrated into modern vehicles has increased at a dizzying pace in the last few years. In this way, the demand that current batteries have to meet has considerably increased, being the control of the state of charge (SoC) and of the state of health (SoH) of batteries some of the main problems to be addressed by motor vehicle manufacturers.

Modern vehicles include state of charge sensors connected in series with the battery cable. These devices have the problem of adding complexity to the vehicle manufacturing assembly stage.

Another concern is fires that break out in vehicles after an accident. Electric defects are, in most cases, one of the main causes of ignition. At present, they have been mitigated by different safety systems such as closing the gas injection valve in the engine. Besides, there exist mechanical devices in charge of disconnecting the battery when an accident is detected by means of obsolete inertial systems or by means of the airbag signal.

In this context, patent ES2184589 incorporates the impact detection by means of accelerometers and illustrates a disconnection system that may be reset in case of an accident to prevent a fire. However, although this patent covers the disconnection in case of detecting a short-circuit in the electrical distribution system, it does not consider safety systems in any case. In fact, in case of detecting an accident and disconnecting from the power supply, said supply is interrupted in the braking system, in the airbag or in the power steering, which may involve an important risk.

Patent WO03057536 discloses a device similar to that of the preceding patent. In this case, the device cannot be reset by the user and in order to solve the problems of incompatibility with the safety systems, it incorporates an auxiliary battery, which involves a parallel power supply network, unviable in principle due to cost, weight, and complexity for modern vehicle manufacturers.

The aforementioned patents, ES2184589 and WO03057536, focus on preventing fires in case of an accident but in no case do they monitor the state of charge of the battery nor do they perform any kind of management of the electrical distribution system.

According to what has been previously discussed, pyrotechnic disconnection systems have started to be included in vehicles. However, these devices lack their own control logic and may only be triggered by an external signal, typically the airbag signal, they cannot be reset and they always depend on a processor which decides whether they have to be activated or not.

On the other hand, in order to manage the state of charge of the batteries, there also exists in the market an alternative product to be installed in the vehicle and disconnect the batteries in case of low charge. Thus, the complete discharge of the vehicle battery can be prevented.

Patent US2006/0132141 discloses a monitoring device connected to the main battery cable, which also has a connector suitable for being connected to the rest of the vehicle data electronic system. The monitoring element may include, in an embodiment, a sensor of the Hall-probe type for measuring the current that circulates through the cable. However, although it integrates monitoring functionalities in the same battery cable, this cable only monitors the current that circulates through it and does not include any type of protection.

Patent US2008/0309469 discloses a battery monitoring device, which in this case is not located in the main battery cable, but at a particular distance from the ground connection wire. The monitoring device may include a fairly large number of functions, specifically current, voltage and temperature but it does not have any type of protection function.

Patent W00144825 discloses a monitoring device in the battery terminal or in the cable connector, therefore not specifically in the cable itself. In this case it is a measuring instrument and an electronic element to measure only the current demanded from the battery.

According to what has been described, there are distinguished different types of actual or patented products connected to the main battery cable of motor vehicles for covering the solutions it presents.

In the first place, the power supply disconnection in case of an accident or a short circuit is required for preventing a fire.

In the second place, the power supply disconnection in case of a critical battery charge level is required.

In the third place, the continuous monitoring of the state of charge for the energy management by means of an external controller is required.

Therefore it is desirable a system that integrates all these requirements, thus solving the aforementioned problems.

### DESCRIPTION OF THE INVENTION

The present invention refers to a smart battery cable for the automotive sector the aim of which is providing the main battery cable with electronic safety and state of charge monitoring functions.

The invention incorporates a series of existing needs in this sector in relation to the vehicle safety.

In case of an accident it is very important to guarantee that the electricity will be cut off in all the vehicle electrical system, to ensure that an electric arc, which in contact with a gasoline leakage may start a fire, cannot be produced. It may rarely occur that a defect in the vehicle manufacturing causes that even when the vehicle is parked a short circuit may be produced, which in turn may cause a fire. These, and in general all cases of fire are unacceptable in modern cars. In this aspect, the research task carried out by vehicle manufacturers, individually and after an accident took place, may be simplified if there existed an impact-resisting and a fire-resisting record, which would provide data on electricity consumption and active consumers, as well as multiplexed information, which refers to state of the vehicle, errors in any electronic device, the detection of an accident by the airbag sensors, the speed in case of an accident or any other information regarded as useful by the vehicle manufacturer for the research of possible fires. This aspect is considered and solved by the present invention.

As a safety measure, the invention incorporates an additional line on which no disconnection of any type is carried out in order to provide constant power supply to the systems that affect the vehicle safety such as power steering, airbags, emergency signal or door opening.

Likewise, the invention integrates a series of functions related to the management of the power supply system.

The increase of electronic components in motor vehicles has created the need for including, in the vehicle electric-electronic architecture, specific devices for determining the state of charge of the battery. Therefore, it is necessary to measure its main physical parameters, specifically, the consumption, the voltage and the temperature, and to process them in a convenient way to estimate its state of charge. When the vehicle is turned off, parked or with the ignition actuated yet the vehicle not started, it is possible that any consumer such as the sidelights, the information and entertainment systems, interior lights, air conditioning systems, etc. may discharge the battery. Both cases are considered and solved by the invention.

The smart battery cable (from now on, SBC), has the role of meeting the aforementioned needs, integrating most of the electronic functionality within the same cable. In this way, the battery cable, apart from fulfilling its function as the main cable of the electrical distribution system, can monitor the state of charge and disconnect the battery in case of an accident, short-circuit or low charge level. Thanks to said function integration, a simpler and a more economical assembly are attained as well as a reduction of the physical space that would be occupied by the three devices needed for fulfilling the functions carried out by the battery cable: a battery charge measuring system, a power supply disconnection safety system and a data record system for the traceability of fires.

Besides, the SBC allows the incorporation of at least one communication interface, the Controller Area Network (from now on, CAN) or the Local Interconnect Network (from now on, LIN) standardized for the automobile industry and valid for all existing vehicles in the market. This communication interface enables to know at any moment the consumption demanded from the battery, and in case of detecting that it is highly over the expected nominal value, to determine that there is a short circuit. In this way, it is possible to have a short circuit detection threshold which can be set according to the vehicle consumption estimate.

The SBC incorporates a non-volatile memory, preferably a flash-type one, in which the last minutes of the vehicle are recorded. These data will be relative and configurable, by programming a microcontroller featured in the SBC, according to the concrete needs of each vehicle. By means of the statistical analysis of these data it would be possible to determine the possible causes of an accident or fire.

This memory is protected by a fireproof and heat resistant material that insulates the memory in case of a fire, preventing its destruction. In this way, if a fire was produced there would be objective data available, once the fire is extinguished, to research onto the possible causes. Thus, by means of the complete system, apart from reducing the fires produced by electrical causes, it will be possible to obtain complementary data for carrying out research on the fire. It should be noted that the provision of a solution to this problem of fire research in vehicles is novel in this sector.

The smart battery cable comprises:
- a connector to the positive terminal of the battery;
- a connector to the negative terminal of the battery or to any electrical ground point in the vehicle;
- a connector to the vehicle electric distribution network;
   where:
- the connector to the positive terminal is joined with an electronic control block by a first main battery cable;
- the connector to the negative terminal is joined to the electronic control block by a connection hose;
- comprises a first connector to the electric distribution network of the vehicle safety systems joined to the electronic control block by a third main battery cable in charge of providing constant power supply to said vehicle safety systems;
- comprises a second connector to the electric distribution network of the rest of the vehicle systems joined to the electronic control block by a second main battery cable;
- the electronic control block placed between the first main battery cable and between the second and the third main battery cable, comprises:
   - a management and control block which in turn comprises a microcontroller which governs the operation of the smart battery cable comprising:
      - a plurality of digital inputs and outputs;
      - at least one communication interface in charge of controlling an external memory;
      - a plurality of A/D converters in charge of converting the monitored parameters into a digital format for their processing by the microcontroller;
   - a state of charge monitoring block which in turn comprises:
      - a plurality of sensors in charge of monitoring parameters in the positive side of the battery subsequently sent to the management and control block for their processing and for obtaining the state of charge and the state of health of the battery;
   - a user interface block which in turn comprises:
      - at least one push-button in charge of allowing the user to reset the system in case of a disconnection of the battery;
      - at least one state indicator in charge of indicating the battery disconnection after the activation of the battery disconnection block;
   - a battery disconnection block which in turn comprises:
      - at least one switch configured to endure the current of the vehicle electric network and in charge of disconnecting the passage of electric current that passes through the second main battery cable;
   - a permanent storage block which in turn comprises:
      - at least one non-volatile memory configured to store data for making a subsequent analysis.

The electronic control block may additionally comprise an automatic resetting block, a communication block and an accident sensor block.

The automatic resetting block comprises at least one mechanical sensor placed in a switch of the vehicle configured to reset the SBC in case of disconnection and joined to the electronic control block by a second communication cable.

The communication block in turn comprises:
- a first interface configured to allow the communication of the microcontroller with the vehicle electronic control units by means of a first communication cable, where said interface is selected from:
   - Local Interconnect Network (LIN);
   - Controller Area Network (CAN);
   - and a combination of the previous ones;
- a second interface configured to allow the communication of the microcontroller with the blocks comprised by the battery cable, where said interface is selected from:
   - Serial Peripheral Interface (SPI);
   - Local Interconnect Network (LIN).

In case that the memory is placed outside of the control block, the second interface would be a LIN; however, if the memory is placed within the electronic block, it would be a SPI.

The smart battery cable comprises a second communication cable between the electronic control block and the blocks comprised by the battery cable placed externally to said electronic control block. Specifically, this second communication cable connects the electronic control block to the permanent storage block as well as to the automatic resetting block.

The accident sensor block in turn comprises a plurality of accelerometers configured to detect impacts and communicate them to the management and control block.

In a preferred embodiment, this accident sensor block comprises at least one dual-axis accelerometer for the detection of a frontal and lateral impact and at least one single-axis accelerometer for the detection of an overturning.

The sensor in charge of monitoring the battery consumption will preferably be a shunt-type resistor.

The indicator of state in a preferred embodiment will consist of at least one LED configured to report the different sources of disconnection of the battery.

The switch of the battery disconnection block will preferably consist of a relay with a bistable behavior in charge of disconnecting the passage of electric current after receiving an order from the management and control block.

Preferably the non-volatile memory of the permanent storage block is a flash-type memory. The memory may be insulated with a fireproof and heat resistant material and is configured to allow the retrieval of the monitored parameters in case of fire. Said memory may be located within the electronic control block and connected to the microcontroller through a Serial Peripheral Interface (SPI) communication bus or outside of the electronic control block and connected to the microcontroller through a Local Interconnect Network (LIN) communication bus.

In a preferred embodiment the microcontroller incorporates a header file with a relative temporal reference to the monitored parameters stored in the non-volatile memory in order to be able to establish a chronology of events for later analysis.

Finally, the smart battery cable may comprise an external trigger block configured to send an order for activating an extinguishing system in case of fire.

The SBC integrates the following electronic functionalities into the battery cable:
- control of state of charge and determination of short circuits;
- disconnection in case of an accident to prevent a fire caused by a short circuit or an electric arc;
- disconnection during the parking in case of a low charge level to prevent the total discharge of the battery;
- data recording for the research and traceability of accidents and fires.

For these purposes, the SBC consists of a battery cable with an integrated electronic circuit in the same cable itself, with the necessary elements for providing it with the aforementioned functionalities. With this new concept it is possible to achieve the integration of the functionalities of three different electronic components into a single product: a battery charge measuring system, a power supply disconnection safety system and a data recording system. This implies cost savings, because as the three products are integrated into one they share technical, resources, while in a separate way there exists an unnecessary duality of components: duplicate power supply, several microcontrollers, double communication interfaces, etc. It is also possible to reduce the physical space of the set of the three devices, which allows saving space and achieving a faster and simpler assembly.

The SBC adds the functionality of data recording for the research of accidents, which is novel, because there are no specific tools for the analysis of fire causes and all research focuses on studying the wreck of the vehicle without any available data previous to the fire or accident.

The SBC is mainly based on the incorporation of an electronic block on a conventional battery cable which provides the cable with the aforementioned functionalities.

The Electronic Block (EB) of the SBC comprises a Management and Control Block, a State of Charge Monitoring Block, an Accident Sensor Block, a Communication Block, a User Interface Block, a Battery Disconnection Block, a permanent data Storage Block and an Automatic Resetting Block.

The Management and Control Block (MCB) is formed by a microcontroller with the necessary processing capacity and the necessary interfaces for controlling all the functionalities of the SBC. It is the central block and it contains the control algorithm, which may be reprogrammable and can be calibrated according to the manufacturer's needs. It will also comply with the typical automotive requirements in relation to self-diagnosis, operating system, etc.

The State of Charge Monitoring Block (SCMB) monitors the consumption, the tension level and the temperature of the battery and communicates them to the MCB. The MCB processes the data for obtaining the state of charge of the battery. These data can be transmitted to an ECU (Electronic Control Unit) having a higher control level to manage the life cycle of the electric consumers. As it is integrated into the positive cable, the monitoring is carried out in the positive side of the electric circuit, being this a novel feature in this sector since what is known from the state of the art involves a monitoring that is either not placed in the battery cable itself or measured in series between the load and the negative or ground terminal of the battery.

The Accident Sensor Block (ASB) consists of several accelerometers for detecting an impact or an overturning and communicating it to the MCB. The ASB can be optionally mounted and that will depend on whether these data for determining the accident are accessible through the Communication Block or not.

The Communication Block (CB) consists of at least one LIN and/or CAN interface for communicating with the vehicle electric-electronic architecture. This gives the SBC the possibility of knowing the vehicle data for their later recording. It also allows the transmission of data such as the state of charge of the battery by means of the vehicle multiplexed communication network, typically by a CAN data network. By means of this network, the different ECUs of the vehicle interchange information, such as the Cabin Central ECU which completely manages the energetic distribution system and the life cycle of the rest of the ECUs, which refers to the sequence and the turn on/off conditions thereof, which conditions the availability and consumption of the vehicle when its engine is on or off. This block is considered to be optional depending on whether the system is completely integrated into the vehicle electric-electronic architecture, or it is assembled as a piece of auxiliary equipment in the vehicle. In this latter case, an ASB would be necessary in order to fulfill the need for sensing the accident.

The User Interface Block (UIB) consists of at least one push-button and one indicator, preferably a LED, on the encapsulation of the SBC. This interface provides the possibility of resetting in case of disconnection so that it is possible to start the vehicle. The indicator indicates if the disconnection block has been activated.

The Battery Disconnection Block (BDB) is controlled by a signal generated by the MCB and may be activated or deactivated. Its function is to open the power supply electric circuit and stop providing electricity to the electric network. However, the additional line incorporated by the SBC allows the provision of constant power supply to the systems affecting the vehicle safety.

The Permanent data Storage Block (PSB) consists of a non-volatile memory in which the MCB writes the necessary data to be able to carry out research on the causes of a possible fire, disconnection due to an accident or another possible cause. This block has a fireproof and heat resistant protection in order to survive the effect of a fire and high temperatures. Also, the SBC may be placed in a disintegrated way by means of a communication system, typically a LIN communication bus, being it possible to arrange it in a place the thermal protection of which would be higher in case of a fire.

The Automatic Resetting Block (ARB) detects the opening of the vehicle and informs the MCB that in case of having cut off the battery due to a low charge level it can reconnect it and inform the user that the battery is about to reach the total discharge.

Apart from the aforementioned blocks, the SBC may take into account a possible External Trigger Block (ETB) for emitting an order to a fire extinguishing system. The EFB will emit a digital signal, sent as a fire order to a system intended for extinguishing a fire or protecting a particular area of the vehicle.

### BRIEF DESCRIPTION OF THE DRAWINGS

There follows a series of figures which will help understand the invention better and which is presented as an illustrative and non-limiting example thereof.
Figure 1 shows a diagram with the components of the smart battery cable.
Figure 2 shows the detailed diagram of the functional blocks of the electronic block of the smart battery cable.

### DETAILED DESCRIPTION OF AN EMBODIMENT

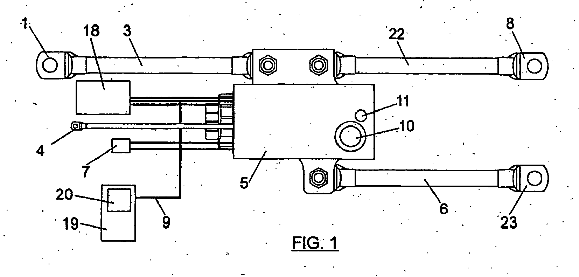

Figure 1 shows the diagram of the components of the SBC, which, consists of a main battery cable formed by three sections, a first main battery cable 3, a second main battery cable 6 with disconnection possibility and a third main battery cable 22 which provides permanent power supply to specific vehicle systems. The main battery cable joins the positive terminal of the battery with the vehicle electric distribution network by means of a first connector to the electric distribution network 8 of the safety systems and by means of a second connector to the electric distribution network 23 of the rest of the vehicle systems.

Between the first 3, and the second 6 and the third 22 main battery cable, an electronic control block 5 is inserted, with the necessary components for providing the SBC with the aforementioned functionalities: control of state of charge and determination of short circuits; disconnection in case of an accident for preventing a fire due to a short circuit or an electric arc; disconnection during parking in case of a low charge level for preventing the total discharge of the battery; and data recording for research and traceability of accidents and fires. The ground connection hose 4 joins the electronic control block 5 for providing a ground reference, wherein this point of reference may be derived from any ground point of the main wiring. A first communication cable 7 that joins the electronic control block 5 with the vehicle multiplexed network for the transmission and consumption of data through the LIN and/or CAN interface. Additionally, it may incorporate a second communication cable 9 which communicates the electronic control block 5 with the Permanent Storage Block 18 and/or with a mechanical sensor 20 placed in the vehicle door, the ignition key or any other electromechanical switch and which is used for the automatic resetting in case of a disconnection due to a low charge level during parking. The SBC also incorporates at least one push-button 10 placed on the electronic control block 5 casing that allows the manual resetting of the device in case of a false detection or a precautionary battery cut for preventing the total discharge thereof. It also includes at least one state indicator 11 for indicating if there has been a battery cut off. Additionally, it may have more indicators of state or LEDs for reporting the different sources of the cut off: low charge level, short circuit or impact.

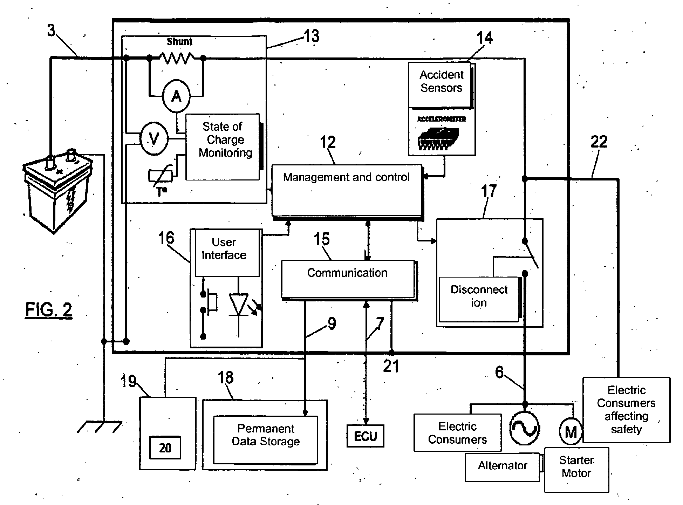

Figure 2 shows the functional blocks that comprise the Electronic control Block (EB) 5 of the SBC.

In a preferred embodiment, the Management and Control Block (MCB) 12, comprises a microcontroller which includes at least a serial communication interface Serial Peripheral Interface (SPI) or a Local Interconnect Network (LIN) for controlling an external memory, A/D converters and a plurality of GPIOs (General Purpose Input/Output) for controlling the different blocks of the system. Additionally, the microcontroller may have a LIN and/or CAN interface for the communication with other ECUs of the vehicle.

The State of Charge Monitoring Block (SCMB) 13 is based on the monitoring of three parameters: consumption, voltage and temperature. Preferably, the consumption is monitored by a shunt-type resistor, the voltage by direct reading with the A/D converter of the microcontroller of the MCB 12 and the temperature by a temperature sensor placed within the EB 5. In this way, if the temperature variation influences on the electric features of the shunt it may be compensated by the behavior characterization of the shunt vis-à-vis the temperature. For the monitoring, the microcontroller must have the necessary A/D converters in order to read these three physical properties. In a preferred embodiment, the microcontroller will have high-precision 16-bit A/D converters. The MCB 12 receives the data received from the SCMB 13 and processes them for obtaining the state of charge (SoC) and the state of health (SoH) of the battery.

The Accident Sensor Block (ASB) 14 is an additional block the realization of which depends on the availability of data through the multiplexed network. It is formed by at least one high acceleration dual-axis measuring accelerometer for the detection of a frontal or a lateral impact and at least one low acceleration single-axis accelerometer for the detection of an overturning.

The Communication Block (CB) 15 for the communication with the vehicle processors. This block is an optional and comprises at least one LIN and/or CAN interface. By means of this communication interface the SBC will be able to transmit data through the multiplexed network which will be consumed by other ECUs.

The User Interface Block (UIB) 16 consists of at least one push-button 10 placed on the casing of the SBC electronic part which allows resetting the device in case of a false detection or a precautionary battery cut off for preventing the total discharge thereof. It will also include at least one state indicator 11, preferably a LED, for indicating if there has been a battery cut off. Additionally, it may incorporate more indicators of state 11 or LEDs for reporting the different sources for the cut off: low charge level, short circuit or impact.

In a preferred embodiment, the Battery Disconnection Block (BDB) 17 is constituted by a relay with a bistable behavior and capacity for enduring the typical current of the power supply networks of the car. It is activated by the control signal of the MCB 12 and its function is to cut off the electricity that passes through the second main battery cable 6. To this end, an operation mode will be programmed in the MCB 12, which in case of detecting that the state of the charge is excessively low and if this is considered to be a critical situation, the battery will be disconnected to prevent its discharge. However, this disconnection would not affect the systems related to the vehicle safety because the SBC incorporates an additional line that allows the provision of constant power supply to these systems.

The Permanent data Storage Block (PSB) 18 is formed by a non-volatile memory. The memory is controlled by the SPI or LIN interface of the microcontroller and allows continuous data storage during the last minutes. In a preferred embodiment, the memory is insulated with a fireproof and heat resistant material to allow the retrieval of the data in case of fire. It could be placed in an area away from the SBC for its protection and it would communicate with the electronic block 5 by means of a second communication cable 9 preferably a LIN. The data to be recorded could be: consumption, speed, active processors during the accident, CAN error frames, source of the error frames and all the data accessible through the multiplexed network that is incorporated and that is programmed for determining the cause of a fire. A data and time header will be added to each recorded data in order to establish a chronology of events and to be able to carry out the traceability of the accident or fire. It will be possible to change which data are to be stored according to the manufacturer's needs by programming the microcontroller of the MCB 12.

The Automatic Resetting Block (ARB) 19 consists of a mechanical sensor 20 placed on the door, the ignition key, etc., that detects the opening of the vehicle and the intention of starting it. This sensor is wired by means of a second communication cable 9 to the SBC and informs the MCB 12 that in case of having cut off the battery due to a low charge level it may reconnect it and inform the user that the battery is about to reach the total discharge.

The second communication cable 9 is used for communicating the PSB 18, in case of being separated from the electric control block 5, as well as for communicating the MCB 12 with the ARB 19.

Finally, the SBC may incorporate the External Trigger Block (ETB) to send a signal to a fire extinguishing system. Preferably, the amplitude of this signal will range from 0 to 12 V and it will consist of a pulse train, being it possible for it to be a redundant signal from two general purpose outputs of the block of the GPIOs configured in a complementary manner, that is, using opposite signals.

Once the invention has been clearly described, it is hereby stated that the particular embodiments hereinabove described can be modified in detail providing that they do not alter the fundamental principle and essence of the invention.

## Claims

1. Smart battery cable comprising:
- a connector to the positive terminal (1) of the battery;
- a connector to the negative terminal of the battery or to any electrical ground point in the vehicle;
- a connector to the vehicle electric distribution network (23);
**characterized in that**:
- the connector to the positive terminal (1) is joined with an electronic control block (5) by a first main battery cable (3);
- the connector to the negative terminal is joined to the electronic control block (5) by a connection hose (4);
- it comprises a first connector to the electric distribution network (8) of the vehicle safety systems joined to the electronic control block (5) by a third main battery cable (22) in charge of providing constant power supply to said vehicle safety systems;
- it comprises a second connector to the electric distribution network (23) of the rest of the vehicle systems joined to the electronic control block (5) by a second main battery cable (6);
- the electronic control block (5) placed between the first main battery cable (3) and between the second (6) and the third (22) main battery cable, comprises:
- a management and control block (12) that in turn comprises a microcontroller which governs the operation of the smart battery cable comprising:
- a plurality of digital inputs and outputs;
- at least one communication interface in charge of controlling an external memory;
- a plurality of A/D converters in charge of converting the monitored parameters into a digital format for their processing by the microcontroller;
- a state of charge monitoring block (13) which in turn comprises:
- a plurality of sensors in charge of monitoring parameters in the positive side of the battery subsequently sent to the management and control block (12) for their processing and for obtaining the state of charge and the state of health of the battery;
- a user interface block (16) which in turn comprises:
- at least one push-button (10) in charge of enabling the user to reset the system in case of a disconnection of the battery;
- at least one state indicator (11) in charge of indicating the battery disconnection after the activation of the battery disconnection block (17);
- a battery disconnection block (17) which in turn comprises:
- at least one switch configured to endure the current of the vehicle electric network and in charge of disconnecting the passage of electric current that passes through the second main battery cable (6);
- a permanent storage block (18) which in turn comprises:
- at least one non-volatile memory configured to store data for making a subsequent analysis.

2. Smart battery cable, according to the previous claim, **characterized in that** the electronic control block (5) comprises an automatic resetting block (19) which in turn comprises at least one mechanical sensor (20) placed in a switch of the vehicle configured to reset the battery cable in case of disconnection and joined to the electronic control block (5) by means of a second communication cable (9).

3. Smart battery cable, according to any of the preceding claims, **characterized in that** the electronic control block (5) comprises a communication block (15) which in turn comprises:
- a first interface configured to allow the communication of the microcontroller with the vehicle electronic control units by means of a first communication cable (7), where said interface is selected from:
- Local Interconnect Network (LIN);
- Controller Area Network (CAN);
- and a combination of the previous ones;
- a second interface configured to allow the communication of the microcontroller with the blocks comprised by the battery cable, where said interface is selected from:
- Serial Peripheral Interface (SPI);
- Local Interconnect Network (LIN).

4. Smart battery cable, according to any of the preceding claims, **characterized in that** it comprises a second communication cable (9) between the electronic control block (5) and the blocks comprising the battery cable placed externally to said electronic control block (5).

5. Smart battery cable, according to any of the preceding claims, **characterized in that** the electronic control block (5) comprises an accident sensor block (14) which in turn comprises a plurality of accelerometers configured to detect impacts and communicate them to the management and control block (12).

6. Smart battery cable, according to claim 5, **characterized in that** the accident sensor block (14) comprises at least one dual-axis accelerometer for the detection of a frontal and a lateral impact and at least one single-axis accelerometer for the detection of an overturning.

7. Smart battery cable; according to any of the preceding claims, **characterized in that** the sensor in charge of monitoring the consumption of the battery is a shunt-type resistor.

8. Smart battery cable, according to any of the preceding claims, **characterized in that** the state indicator (11) consists of at least one LED configured to report the different sources of battery disconnection.

9. Smart battery cable, according to any of the preceding claims, **characterized in that** the switch of the battery disconnection block (17) consists of a relay with a bistable behavior in charge of disconnecting the passage of electric current after receiving an order from the management and control block (12).

10. Smart battery cable, according to any of the preceding claims, **characterized in that** the non-volatile memory of the permanent storage block (18) is a flash-type one.

11. Smart battery cable, according to any of the preceding claims, **characterized in that** the non-volatile memory of the permanent storage block (18) is insulated with a fireproof and heat resistant material and configured to allow the retrieval of the monitored parameters in case of fire.

12. Smart battery cable, according to any of the preceding claims, **characterized in that** the non-volatile memory of the permanent storage block (18) is placed within the electronic control block (5) and connected to the microcontroller through a Serial Peripheral Interface (SPI) communication bus.

13. Smart battery cable, according to any of the preceding claims, **characterized in that** the non-volatile memory of the permanent storage block (18) is placed outside the electronic control block (5) and connected to the microcontroller through a Local Interconnect Network (LIN) communication bus.

14. Smart battery cable, according to any of the preceding claims, **characterized in that** the microcontroller incorporates into the monitored parameters stored in the non-volatile memory a header file with a relative temporal reference.

15. Smart battery cable, according to any of the preceding claims, **characterized in that** it comprises an external trigger block (21) configured to send an order to activate an extinguishing system in case of fire.
